# EUROPÄISCHE PATENTSCHRIFT

(11) **EP 0 813 278 B1**
(45) Veröffentlichungstag und Bekanntmachung des Hinweises auf die Patenterteilung: **28.11.2001**
(21) Anmeldenummer: 97107338.2
(22) Anmeldetag: 03.05.1997
(51) Int. Cl.: F16L 3/00

(54) **Als Blechformteil hergestellte Kopfplatte**
Head plate made of sheet metal
Plaque de tête en tôle préformée

(30) Priorität: 15.06.1996 DE 19623957
(43) Veröffentlichungstag der Anmeldung: 17.12.1997
(73) Patentinhaber: Rico GmbH & Co. KG, 73230 Kirchheim (DE)
(72) Erfinder: Barner, Gerhard, 73230 Kirchheim/Teck-Ötlingen (DE); Fink, Ewald, 73095 Albershausen (DE); Wennrich, Hans-Oswald, 73275 Ohmden (DE)
(74) Vertreter: Patentanwälte Rüger, Barthelt & Abel

(56) Entgegenhaltungen:
- EP-A- 0 108 222
- DE-A- 3 008 510

## Beschreibung

Wenn in Gebäuden große Mengen von Kabeln über gleiche Strecken verlegt werden müssen, so geschieht dies nicht, indem Kabel einzeln mit Schellen an der Wand befestigt werden, sondern mit Hilfe sogenannter Kabelrinnen oder Kabelpritschen, in denen die Kabel lose liegen. Die Kabelrinnen oder Kabelpritschen liegen ihrerseits auf Auslegern auf, die an Hängestielen befestigt sind. Um die Hängestiele an den Decken der Gebäude zu befestigen, werden sogenannte Kopfplatten verwendet, die das Bindeglied zwischen der Decke und dem betreffenden Stiel darstellen.

Die Kopfplatte ist keine Platte im geometrischen Sinne. Sie hat eine von der Scheiben- oder Plattenform abweichende Gestalt, insofern, als sie Strukturelemente aufweist, an denen der Stiel befestigt werden kann, der bei Deckenbefestigung rechtwinklig zu der von der Decke definierten Ebene wegsteht. Dieser rechtwinklige Verlauf spiegelt sich an der Kopfplatte wieder, die dementsprechend einen an der Decke zu befestigenden Flansch und einen rechtwinklig dazu verlaufenden Flansch zur Befestigung des Stiels aufweist. Diese beiden Teile sind bei den aus der Praxis bisher bekannten Kopfplatten für größere Lasten miteinander verschweißte Stahlteile. Die Stahlteile müssen gegen Korrosion geschützt werden, was üblicherweise durch Verzinken geschieht. Wegen des Schweißvorgangs kann kein vorverzinktes Halbzeug verwendet werde, denn durch das Schweißen würde die Verzinkung unter Erzeugung giftiger Gase wegbrennen, womit die Schweißnaht und die Umgebung der Schweißnaht ungeschützt sind. Folglich können nur unverzinkte Stahlteile zum Einsatz kommen und die fertig geschweißten Kopfplatten müssen anschließend einer Verzinkung in einem Verzinkungsbad unterzogen werden.

Ein vorheriges Verzinken der Rohteile wäre, verglichen mit diesem Verfahren, wesentlich kostengünstiger. Es könnten die zusätzlichen Wegekosten von dem Hersteller der Kopfplatten zu der Galvanisieranstalt und zurück vermieden werden.

Dagegen ist es bekannt, bei sehr geringen Lasten einstückige Kopfplatten zu verwenden, wie dies beispielsweise in dem RICO-Katalog der Firma Rieth & Co. GmbH, 1989, Seite 28, 29 gezeigt ist. Diese Kopfplatte hat etwa die Gestalt einer Kofferecke, wobei der Stielflansch und der Deckenflansch über einen etwa dreieckförmigen Versteifungsflansch miteinander verbunden sind. Der Deckenflansch ist doppellagig und besteht aus einer Lasche, die vom Verstärkungsflansch abgekantet ist und einer weiteren Lasche, die vom Stielflansch ausgeht.

Der Schwachpunkt bei dieser Lösung ist der Übergang von der Befestigungsschraube in den Deckenflansch. Die Lastabstragung aus der Befestigungsschraube in den Deckenflansch entspricht der Fläche der Beilagscheibe zwischen dem Deckenflansch und der Befestigungsmutter. Die ohne bleibende Verformung abzutragende Kraft ist recht gering.

Ähnlich sind die Verhältnisse bei der Kopfplatte, wie sie in der DE 30 08 510 A1 gezeigt sind. Die Kopfplatte besteht aus einem Blechwinkel von dem ein Schenkel den Deckenflansch und der andere den Stielflansch bildet. Der Stielflansch ist gekröpft, damit die Anlagefläche für den Stiel unter der Mitte des Deckenflansches verläuft. Der Deckenflansch ist glatt.

Zur Befestigung der Kopfplatte ist lediglich eine Bohrung in dem Deckenflansch enthalten, womit diese Kopfplatte nur für Stiele geeignet ist, bei denen hauptsächlich Zugkräfte und nur geringe Biegemomente über die Kopfplatte in die Decke eingeleitet werden.

Die EP 0 108 222 A2 zeigt ein Traggestell für Kabelpritschen, die auf einen Ausleger aufgelegt werden, die an einem Hängestiel befestigt sind. Zur Verbindung des Hängestiels mit der Decke, sind jeweils zwei Kopfplatten vorhanden, zwischen denen der Stiel an Haken aufgehängt ist. Die Haken sind aus dem Stielflansch der jeweiligen Kopfplatte ausgeklinkt. Der Deckenflansch jeder der beiden Kopfplatten ist glatt und mit zwei Befestigungsbohrungen versehen. Die Kräfte werden über insgesamt vier Befestigungsbohrungen in die Decke eingeleitet. Eine Befestigung des Stiels an der Decke mit lediglich einer einzelnen Kopfplatte ist nicht vorgesehen.

Ausgehend hiervon ist es Aufgabe der Erfindung, eine Deckenbefestigung für einen Stiel zum Tragen von Kabelpritschen mittels lediglich einer Kopfplatte zu schaffen, wobei die Kopfplatte aus vorverzinktem Halbzeug hergestellt werden kann und in der Lage ist, größere Lasten abzutragen.

Diese Aufgabe wird erfindungsgemäß durch die Kopfplatte mit den Merkmalen des Anspruches 1 gelöst.

Da die neue Kopfplatte ein einstückiges Blechformteil ist, kann zur Herstellung vorverzinktes, beispielsweise bandverzinktes, Stahlblech vom Coil eingesetzt werden. Die Materialstärke ist so gering, dass die beim Ausschneiden des Blechzuschnitts entstehenden blanken Kanten durch die vorhandenen beidseitigen Zinkschichten und die entstehenden elektrischen Felder mit geschützt sind. Der Umformvorgang selbst beschädigt die Verzinkung nicht. Nach dem Ausstanzen des Blechzuschnitts und dem Umformen desselben zu der gewünschten Kopfplatte ist diese fertig. Ein weiterer Bearbeitungsschritt und die damit eventuell verbundenen Transportaufwendungen entfallen vollständig.

In einer besonders einfachen Ausführungsform für leichte Arwendungen, also Anwendungen mit niedrigem Gewicht, gerügt es, wenn die Kopfplatte im wesentlichen die Gestalt eines einfachen Winkels hat. Dabei bildet ein Schenkel den Deckenflansch, der zur Anbringung an der Decke vorgesehen ist, während der andere Schenkel als Stielflansch zur Befestigung des Stieles dient.

Eine Versteifung des Deckenflansches wird dadurch erreicht, dass die dort enthaltenen Durchgangsöffnungen für die Befestigungsschrauben von einer umlaufenden Sicke eingerahmt sind. Eine Verformung dieser Sicken beim Anziehen der Befestigungsschrauben wird von Laschen verhindert, die von Lochrändern ausgehen und in die jeweilige Sicke aufragen.

Sicken, die in dem Stielflansch enthalten sind und sich bis in den Deckenflansch fortsetzen, können dabei gleichzeitig als Drehsicherungsmittel gegen unerwünschtes Verschwenken des Stiels in der Ebene des Stielflansches dienen, und gleichzeitig können die Sicken, die sich über die Biegekante fortsetzen, die Steifigkeit der Kopfplatte senkrecht zu dem Stielflansch erhöhen.

Um ein Sperren des Stiels bei einer derartigen Kopfplatte im Bereich der Biegekante, an der der Deckenflansch in den Stielflansch übergeht, zu vermeiden, kann diese Biegekante zurückversetzt sein. Dies geschieht im einfachsten Falle, inc.em an der Übergangsstelle zwischen dem Deckenflansch und dem Stielflansch eine zurückspringende Nut oder Sicke ausgebildet ist, d.h. der Stielflansch ist gegenüber derjenigen Seite des Deckenflansches, der er unmittelbar benachbart ist, ein Stück weit in Richtung auf die dazu parallel verlaufende andere Seitenkante des Deckenflansches versetzt.

Um unnötiges Material einzusparen, kann der Stielflansch etwa trapezförmig gestaltet sein. Diese Materialersparnis reduziert das Gewicht und damit die Transportkosten vom Hersteller zum Einsatzort.

In der Zeichnung ist ein Ausführungsbeispiel des Gegenstandes der Erfindung dargestellt. Es zeigen:
Fig. 1 eine Prinzipdarstellung eines Kabeltragsystems, in einer perspektivischen Teilansicht,
Fig. 2 eine leichte Kopfplatte für das Kabeltragsystem nach Fig. 1, in einer perspektivischen Ansicht schräg von unten nach oben,
Fig. 3 den Blechzuschnitt für die Kopfplatte nach Fig. 2, in einer Draufsicht und
Fig. 4 den Zuschnitt nach Fig. 3 in einem Längsschnitt, geschnitten entlang der Linie IV-IV nach Fig. 3.

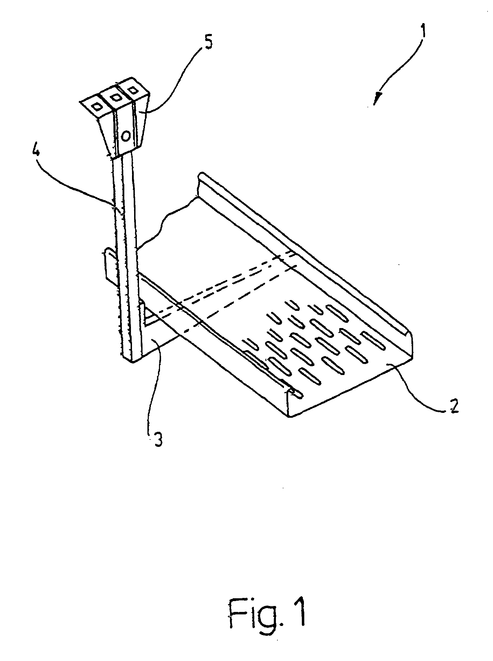

Fig. 1 zeigt ein Kabeltragsystem 1 in einer perspektivischen Ansicht. Dieses Kabeltragsystem 1, von dem lediglich ein Ausschnitt dargestellt ist, dient dazu, in Gebäuden große Bündel von Kabeln zu verlegen. Die nicht dargestellten Kabel liegen in sogenannten Kabelrinnen 2. An Stelle der gezeigten Kabelrinnen 2 können auch sogenannte Kabelpritschen zum Einsatz kommen.

Die Kabelrinnen 2 liegen in größeren Abständen von mehreren Metern auf Auslegern 3, die an Hängestielen 4 befestigt sind. Die Anbringung des Stiels 4 an der nicht dargestellten Decke des Gebäudes erfolgt mit Kopfplatten 5, die wenigstens einen Stielflansch 6, an dem der Stiel befestigt ist, sowie wenigstens einen Deckenflansch 7 aufweisen, der an der Decke des betreffenden Gebäudes anzubringen ist und unmittelbar in den Stielflansch 6 übergeht.

Fig. 1 zeigt eine hängende Montage des Stiels 4. An Stelle der hängenden Montage kann auch eine stehende Montage in Frage kommen. In diesem Falle ist die Kopfplatte 5 mit dem Deckenflansch 7 auf einem Boden des Gebäudes zu verschrauben.

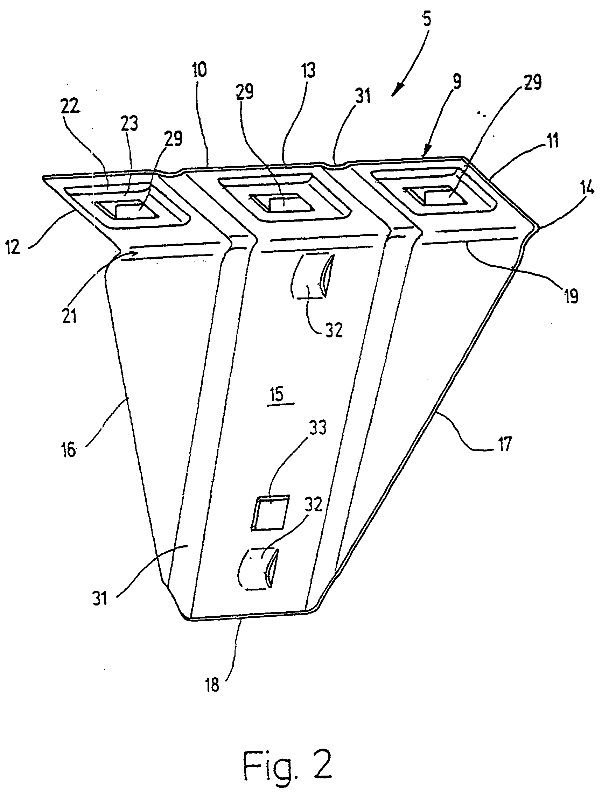

Die in Fig. 1 stark vereinfacht gezeigte Kopfplatte 5 ist in den Fig. 2 bis 4 in unterschiedlichen Fertigungsstufen im einzelnen gezeigt. Dabei veranschaulicht Fig. 2 die fertig gebogene Kopfplatte 5 in einer perspektivischen Ansicht schräg nach unten nach oben. Um das Verständnis der perspektivischen Darstellung zu erleichtern, ist außerdem der erforderliche Blechzuschnitt, aus dem die Kopfplatte hergestellt wird, in einer Draufsicht bzw. im Längsschnitt gezeigt unter gleichzeitiger Angabe der erforderlichen Biegelinien. Für die von den Biegelinien abgeteilten Felder werden dieselben Bezugszeichen verwendet wie für die fertigen Strukturen an der endgültig geformten Kopfplatte.

Die Kopfplatte 5 ist ein einstückiges Blechformteil, das aus einem vorverzinkten Stahlblechzuschnitt 8 hergestellt ist. Die Kopfplatte 5 weist einen in der Draufsicht etwa rechteckigen Deckenflansch 9 mit einer Oberseite 10 auf, der von zwei zueinander parallelen kurzen Schnittkanten 11 und 12, einer langen Schnittkante 13 und einer Biegekante 14 begrenzt ist.

An der Biegekante 14 geht der Deckenflansch 9 in den etwa trapezförmig zugeschnittenen Stielflansch 15 über. Der Stielflansch 15 ist zusätzlich von Schnittkanten 16, 17 und 18 begrenzt, wobei die beiden Schnittkanten 16 und 17, ausgehend vor. der Biegelinie 14, zu der Schnittkante 18 konvergieren, die schmäler als die Länge der Biegelinie 14 ist. Deckenflansch 9 und Stielflansch 15 sind rechtwinkelig zueinander.

Die Eiegelinie 14 ist zurückversetzt, damit der an der Biegelinie 14 zwangsläufig auftretende Rundungsradius nicht mit dem Stiel 4 kollidiert. Um dieses Zurückversetzen zu erreichen, ist der Stielflansch 15 an seinem oberen Ende an einer weiteren Biegelinie 19 etwas abgekröpft, wodurch in dem Übergangsbereich zwischen dem Deckenflansch 9 und dem Stielflansch 15 eine parallel zu der Biegelinie 14 verlaufende durchgehende Sicke 21 entsteht, in deren Grund sich die Biegelinie 14 befindet, an der der Deckenflansch 9 in Richtung auf den Stielflansch 15 abgebogen ist.

In den Deckenflansch 9 sind drei gleich ausgebildete, im Grundriss rechteckige Sicken 22 eingeprägt, die von einem ebenen Boden 23 begrenzt sind, der parallel zu der durch den Deckenflansch 9 definierten Ebene verläuft. Jede etwa napfförmige Sicke 22 ist allseits geschlossen. Sie sind längs der langen Erstreckung des Deckenflansches 9 gleich verteilt und liegen auf einer Geraden. Außerdem sind die Sicken aus der Sicht der Oberseite 10 vertieft.

In dem Boden 23 jeder der Sicken 22 ist eine rechteckige Durchgangsöffnung 24 ausgestanzt, die von vier paarweise zueinander parallelen Rändern 25, 26, 27 und 28 begrenzt sind. Die Durchgangsöffnungen 24 sind ebenfalls rechteckig, wobei die Ausrichtung des Rechtecks die gleiche ist, wie die Ausrichtung der rechteckigen trogförmigen Sicke 22.

Die beiden Lochränder 26 und 28 sind gleichzeitig Biegekanten, von denen Laschen 29 ausgehen, die, bezogen auf die normale Gebrauchsstellung gemäß Fig. 1, nach oben zeigen. Die Laschen 29 haben eine Erstreckung in Richtung parallel zu der Längsachse der Durchgangsöffnungen 24 entsprechend deren Länge. Hingegen entspricht die Tiefe der Laschen 29, gemessen in Richtung senkrecht zu der von dem Deckenflansch 9 definierten Ebene, etwa der Tiefe der napfförmigen Sicke 22, d.h. die freie Kante der Laschen 29 liegt etwa in der Ebene der Oberseite 10 des Deckenflansches 9.

Diese Laschen 29 haben die Aufgabe, beim Anziehen der Befestigungsschraube als Stützmittel zu dienen, um ein Flachquetschen der trogförmigen Sicken 22 durch das Anziehen der Schrauben zu verhindern.

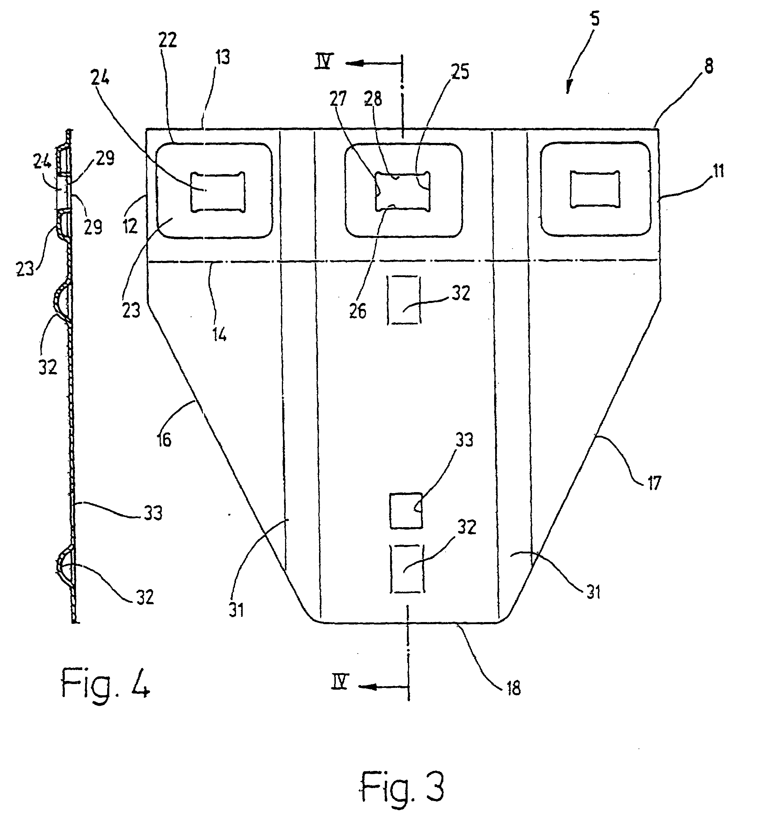

In dem Bereich zwischen der mittleren napfförmigen Sicke 22 und den beiden äußeren napfförmigen Sicken 22 verlaufen zwei rinnenförmige Sicken 31 parallel und mit Abstand voneinander. Diese Sicken 31 überqueren sowohl den Deckenflansch 9 von der Schnittkante 13 bis zu der Biegelinie 14 als auch den Stielflansch 15, bis sie an der Schnittkante 18 bzw. den seitlichen Schnittkanten 16 und 17 enden. Sie sind so geformt, dass sie in den Innenbereich vorstehen, der zwischen dem Deckenflansch 9 und dem Stielflansch 15 begrenzt ist, d.h. sie sind, bezogen auf die Darstellung nach Fig. 3, auf den Betrachter zu erhaben, d.h. in dieselbe Richtung wie die napfförmigen Sicken 22. Diese Sicken 31 durchqueren somit auch die Sicke 21 und haben deswegen eine versteifende Wirkung hinsichtlich von Biegekräften, die im Gebrauch auftreten und bestrebt sind, den Stielflansch 15 gegenüber dem Deckenflansch 9 zu verbiegen.

Außerdem dienen die Sicken 31 im Bereich des Stielflansches 15 als Drehsicherungsmittel, denn ihr Abstand entspricht der Breite des Stiels 4. Er ist auf diese Weise zwischen den Sicken 31 eingebettet und kann sich nicht in der Ebene des Stielflansches 15 drehen.

Als weitere Drehsicherungsmittel für den Stiel 4 sind zwischen den beiden Sicken 31 Vorwölbungen 32 ausgeklinkt, die sich in derselben Richtung erheben wie die Sicken 31. Diese Vorwölbungen 32 haben die Gestalt eines von parallelen Rändern begrenzten Bandes, das an beiden Enden einstückig in den Stielflansch 15 übergeht. Ihre Breite entspricht Befestigungsöffnungen, die in dem Stiel 4 enthalten sind.

Schließlich ist oberhalb der unteren Vorwölbung 32 in dem Stielflansch 15 eine rechteckige Durchgangsöffnung 33 enthalten, die der Aufnahme des Vierkants einer Flachrundkopfschraube mit Vierkantansatz dient, mit deren Hilfe der Stiel 4 an dem Stielflansch 15 befestigt wird.

Die Handhabung der beschriebenen Kopfplatte 5 geschieht in der Weise, dass zunächst in der Decke zwei Dübellöcher für Schrauben gesetzt werden, deren Achsabstand gleich dem Abstand der äußeren beiden Durchgangsöffnungen 24 ist. Sodann werden die Schraubenbolzen in die Decke eingesetzt und es wird die Kopfplatte 5 über die Gewindeschäfte dieser so gesetzten Schraubenbolzen gesteckt. Zwei anschließend auf die Gewindeschäfte aufgeschraubte Muttern drücken die Kopfplatte 5 mit ihrer Oberseite 10 gegen die Decke, wobei, wie erwähnt, die Laschen 29 dazu dienen, eine Verformung der napfförmigen Sicken 22 zu verhindern.

Nachdem die Kopfplatte 5 an der Decke befestigt ist, wird der Stiel an dem Stielflansch 15 angebracht, und zwar so, dass sein Rücken flach auf der in Fig. 2 sichtbaren Innenseite des Stielflansches 15 aufliegt, der vertikal nach unten ragt. Der Stiel 4 übergreift mit entsprechenden Löchern die Vorwölbungen 32, so dass sich insgesamt eine mehrfache Drehsicherung ergibt. Er wird schließlich mit einer durch die Öffnung 33 gesteckten Schraube und einer von der Gegenseite her aufgedrehten Mutter gegen den Stielflansch 15 festgezogen und dadurch fixiert.

Die beschriebene Kopfplatte ist aus einem einzigen Blechzuschnitt durch Umformen hergestellt. Aufgrund des Umformungsvorgangs entsteht ein Stielflansch, an dem der Stiel zu befestigen ist sowie wenigstens ein Deckenflansch, mit dem die Kopfplatte an der Decke des Gebäudes anzuschrauben ist.

## Patentansprüche

1. Kopfplatte (5), die zum Anbringen von Stielen (4) von Kabeltragkonstruktionen (1) an Decken von Räumen und Gebäuden eingerichtet und in Gestalt eines einstückigen Blechformteils ausgeführt ist, das durch Umformen eines einzigen Blechzuschnitts (8) gebildet ist und aufweist:
einen zur Anbringung eines Stiels (4) vorgesehenen Stielflansch (15), der eine Flachseite aufweist, an der ein Stiel (4) zur Anlage zu bringen ist,
einen zur Anlage an der Decke eingerichteten Deckenflansch (9), der eine Ebene definiert, die senkrecht auf einer von dem Stielflansch (15) definierten Ebene steht,
**dadurch gekennzeichnet, dass** der Deckenflansch (9) zum Durchtritt von Befestigungsschrauben wenigstens zwei rechteckige von. paarweise zueinander parallelen Rändern (25,26,27,28) begrenzten Durchgangsöffnungen (24) enthält, von denen jede von einer Sicke (22) umgeben ist und von denen jede an wenigstens zwei zueinander parallelen Rändern (26,28) mit Laschen (29) versehen ist, die in der jeweiligen Sicke (22) aufragen und deren Höhe der Tiefe der Sicke (22) entspricht.

2. Kopfplatte nach Anspruch 1, **dadurch gekennzeichnet, dass** der Stielflansch (15) über eine an der einer Seite des Deckenflansches (9) liegende Biegekante (14) unmittelbar in den Deckenflansch (9) übergeht.

3. Kopfplatte nach Anspruch 2, **dadurch gekennzeichnet, dass** der Stielflansch (15) in Richtung auf die der einen Seite gegenüberliegende Seite (13) des Deckenflansches (9) ein Stück weit versetzt ist.

4. Kopfplatte nach Anspruch 1, **dadurch gekennzeichnet, dass** der Stielflansch (15) über eine parallel zu dem Deckenflansch (9) verlaufende Sicke (21) in den Deckenflansch (9) übergeht.

5. Kopfplatte nach Anspruch 1, **dadurch gekennzeichnet, dass** der Stielflansch (15) im Grundriss trapezförmig ist, derart, dass er, ausgehend von dem Deckenflansch (9), schmäler wird.

6. Kopfplatte nach Anspruch 1, **dadurch gekennzeichnet, dass** der Stielflansch (15) als Schwenksicherungsmittel zwei voneinander beabstandete und parallel zueinander verlaufende Sicken (31) enthält, die parallel zu dem anzubringenden Stiel (4) verlaufen, wobei der Abstand der Sicken (31) der Breite des Stiels (4) entspricht.

7. Kopfplatte nach Anspruch 6, **dadurch gekennzeichnet, dass** sich die Sicken (31), die als Schwenksicherungsmittel dienen, in den Deckenflansch (9) fortsetzen.

## Claims

1. Head plate (5), which is fitted for the attachment of stems (4) of cable support structures (1) to ceilings of rooms and buildings and is constructed in the form of a sheet metal preform in one piece, which is formed by reshaping a single sheet metal blank (8), and has:
a stem flange (15) for the attachment of a stem (4) having a flat side, against which a stem (4) is to be brought into abutment,
a ceiling flange (9) fitted for abutment against the ceiling and defining a plane standing perpendicular on a plane defined by the stem flange (15),
**characterised in that** the ceiling flange (9) contains at least two rectangular openings (24) bound by edges (25, 26, 27, 28) arranged parallel in pairs for fastening screws to pass through, each of said openings being surrounded by a crimp (22) and each being provided on at least two parallel edges (26, 28) with lugs (29), which project upwards in the respective crimp (22), their height corresponding to the depth of the crimp (22).

2. Head plate according to Claim 1, **characterised in that** the stem flange (15) merges directly into the ceiling flange (9) via a curved edge (14) located on one side of the ceiling flange (9).

3. Head plate according to Claim 2, **characterised in that** the stem flange (15) is displaced slightly in the direction of the side (13) of the ceiling flange (9) lying opposite the one side.

4. Head plate according to Claim 1, **characterised in that** the stem flange (15) merges into the ceiling flange (9) via a crimp (21) running parallel to the ceiling flange (9).

5. Head plate according to Claim 1, **characterised in that** the stem flange (15) has a trapezoidal contour such that it narrows as it extends from the ceiling flange (9).

6. Head plate according to Claim 1, **characterised in that** as securing means against swivelling, the stem flange (15) contains two crimps (31) spaced from one another and running parallel to one another which run parallel to the stem (4) to be attached, whereby the spacing of the crimps (31) corresponds to the width of the stem (4).

7. Head plate according to Claim 6, **characterised in that** the crimps (31) serving as securing means against swivelling extend into the ceiling flange (9).

## Revendications

1. Plaque de tête (5) destinée à la fixation de tiges (4) de dispositifs de supportage de câbles (1) à des plafonds de locaux et de bâtiments, conçue sous la forme d'une pièce de forme en tôle réalisée par déformation d'une unique découpe de tôle (8) et comprenant:
une aile de tige (15) destinée à la fixation d'une tige (4) et présentant un côté plat contre lequel une tige (4) doit être appliquée,
une aile de plafond (9) conçue pour l'application contre un plafond et définissant un plan qui est perpendiculaire à un plan défini par l'aile de tige (15),
**caractérisée par le fait que** l'aile de plafond (9) présente, pour le passage de vis de fixation, au moins deux ouvertures de passage (24) rectangulaires délimitées par des bords (25, 26, 27, 28) parallèles entre eux par paires, dont chacune est entourée par une moulure (22) et dont chacune présente sur au moins deux bords (26, 28) parallèles entre eux des pattes (29) qui font saille vers le haut dans la moulure respective (22) et dont la hauteur correspond à la profondeur de la moulure (22).

2. Plaque de tête suivant la revendication 1, **caractérisée par le fait que** l'aile de tige (15) se raccorde directement à l'aile de plafond (9) par une arête de pliage (14) située sur un côté de l'aile de plafond (9).

3. Plaque de tête suivant la revendication 2, **caractérisée par le fait que** l'aile de tige (15) est décalée en direction du côté (13) de l'aile de plafond (9) qui est opposé audit un côté.

4. Plaque de tête suivant la revendication 1, **caractérisée par le fait que** l'aile de tige (15) se raccorde à l'aile de plafond (9) en passant par une moulure (21) s'étendant parallèlement à l'aile de plafond (9).

5. Plaquc de tête suivant la revendication 1, **caractérisée par le fait que** l'aile de tige (15) présente en plan la forme d'un trapèze de manière à diminuer de largeur depuis l'aile de plafond (9).

6. Plaque de tête suivant la revendication 1, **caractérisée par le fait que** l'aile de tige (15) comprend, en tant que moyens anti-pivotement, deux moulures (31) parallèles espacées s'étendant parallèlement à la tige (4) à fixer, la distance réciproque des moulures (31) correspondant à la largeur de la tige (4).

7. Plaque de tête suivant la revendication 6, **caractérisée par le fait que** les moulures (31) servant de moyens anti-pivotement sont prolongées dans l'aile de plafond (9).
